# FASCICULE DE BREVET EUROPEEN

(11) **EP 0 549 450 B1**
(45) Date de publication et mention de la délivrance du brevet: **03.05.1995**
(21) Numéro de dépôt: 92403498.6
(22) Date de dépôt: 21.12.1992
(51) Int. Cl.: B25J 21/02, G21F 7/053

(54) **Ensemble porte-gant pour une enceinte de confinement**
Handschuhhalteeinrichtung für Isolierraum
Glove holding means for a sealed enclosure

(30) Priorité: 24.12.1991 FR 9116107
(43) Date de publication de la demande: 30.06.1993
(73) Titulaire: COGEMA COMPAGNIE GENERALE DES MATIERES NUCLEAIRES, F-78141 Velizy-Villacoublay (FR)
(72) Inventeur: Picco, Bernard, F-30131 Pujaut (FR)
(74) Mandataire: Dubois-Chabert, Guy

(56) Documents cités:
- FR-A- 1 291 660
- FR-A- 2 195 510
- FR-A- 2 500 355
- US-A- 3 009 164
- US-A- 3 051 963

## Description

L'invention concerne un ensemble porte-gant pour une enceinte de confinement, plus connue sous le nom de boîte à gants.

Une enceinte de confinement est une chambre à parois rigides, étanches, présentant généralement une vitre transparente permettant de voir à l'intérieur de l'enceinte, depuis l'extérieur. Cette enceinte est munie de plusieurs orifices dans chacun desquels est fixé un gant. Les techniciens utilisant cette enceinte de confinement, se servent de ces gants pour travailler à l'intérieur de ladite enceinte et pour manipuler divers produits toxiques ou radioactifs. En conséquence, il est essentiel que ces enceintes soient étanches afin d'éviter toute pollution à l'extérieur. Les gants, lorsqu'ils sont usagés, doivent donc être remplacés, tout en conservant l'étanchéité de l'enceinte.

Les gants classiquement utilisés sont des gants formés d'une seule pièce, d'une longueur d'environ 70 à 80 cm couvrant la main, l'avant-bras et une partie du bras de l'utilisateur. Ces gants, et notamment la partie protégeant la main, s'usent très rapidement et ont une durée de vie limitée, car ils sont utilisés en milieu nitrique et/ou radioactif.

L'élimination de ces gants crée une quantité de déchets importante. A titre d'exemple purement illustratif, sachant qu'un gant présente une masse totale d'environ 250 g, et qu'on utilise en moyenne 500 gants par an dans une unité de production, on parvient à créer une masse de déchets d'environ 125 kg.

En outre, le remplacement de ces gants est coûteux, car il faut changer la totalité du gant, alors que seule la partie d'extrémité protégeant la main est généralement abîmée.

De plus, il pourrait être intéressant d'utiliser des gants en deux parties, avec une première partie protégeant le bras et une deuxième partie protégeant uniquement la main. Cette deuxième partie pourrait être réalisée dans des matériaux différents et présenter une épaisseur, une résistance, une forme et des dimensions différentes en fonction des applications ou des utilisateurs auxquels elle est destinée. Ainsi, l'utilisateur pourrrait travailler avec des gants de protection de la main extrêmement fins, du type gant de chirurgien pour des manipulations précises et délicates et avec des gants épais pour des manipulations nécessitant une protection particulière mais pas une grande finesse de doigté. Actuellement, ceci est difficilement mis en pratique, puisqu'il est souvent nécessaire de changer la totalité du gant, lorsqu'on souhaite remplacer celui-ci.

Pour résoudre ces problèmes de déchets et de remplacement de gants usagés, on connaît, d'après le brevet US-A-4 141 609, un ensemble porte-gant comprenant un manchon de protection du bras et de l'avant-bras, muni de soufflets et un gant de protection de la main, ce gant étant monté sur le manchon de protection par des moyens de fixation amovibles. Chaque gant amovible est fixé sur un rond de gant coopérant avec un anneau prévu à l'extrémité du manchon de protection à soufflets. Lors du changement du gant de protection de la main, il est nécessaire d'utiliser un outil spécial pour déverrouiller et séparer le rond de gant, de l'extrémité du manchon à soufflets, afin d'introduire un gant de remplacement muni également d'un rond de gant. Ce dispositif est complexe à mettre en oeuvre et du fait de la nécessité d'utiliser des ronds de gant, augmente la quantité de déchets. En outre, le manchon à soufflets est rigide et limite les mouvements du bras et de l'avant-bras de l'utilisateur.

En conséquence, l'invention a pour but de remédier aux inconvénients précédemment cités.

A cet effet, l'invention concerne un ensemble porte-gant pour une enceinte de confinement, cette enceinte comportant au moins une ouverture d'accès sur laquelle est fixé un rond de gant, l'ensemble porte-gant comportant un manchon de protection du bras et de l'avant-bras fixé sur ledit rond de gant et un gant de travail protégeant la main et muni de moyens d'assemblage avec ledit manchon de protection.

Selon la partie caractérisante de la revendication 1, le manchon de protection comprend au moins deux parties, une première partie munie de soufflets et une deuxième partie réalisée dans un matériau souple, cette deuxième partie pouvant se replier à l'intérieur de ladite première partie et l'ensemble porte-gant selon l'invention comprend des moyens de blocage des moyens d'assemblage du gant et du manchon de protection, ces moyens de blocage étant mobiles entre une position verrouillée dans laquelle ils maintiennent les moyens d'assemblage et le gant à l'extérieur de l'enceinte et une position déverrouillée dans laquelle ils autorisent le passage du gant et de ses moyens d'assemblage entre l'intérieur et l'extérieur de l'enceinte.

De façon avantageuse, les moyens d'assemblage du gant et du manchon de protection comprennent un bracelet porte-gant prévu à l'extrémité dudit manchon et apte à coopérer avec un joint torique prévu sur le gant, et les moyens de blocage comprennent au moins deux éléments pouvant être assemblées l'un avec l'autre autour du rond de gant de l'enceinte, chacun de ces éléments présentant un épaulement en arc de cercle apte à recevoir au moins une partie dudit bracelet porte-gant et à bloquer celui-ci lorsque les dits éléments sont assemblées en position verrouillée.

Ainsi, ces moyens de blocage permettent de maintenir le gant à l'extérieur de l'enceinte, sans que l'utilisateur ait besoin de le tenir et sans que ce gant ne soit aspiré à l'intérieur de l'enceinte du fait de la dépression qui règne à l'intérieur de celle-ci. Le rond de gant se présente correctement face à l'utilisateur et celui-ci peut aisément adapter le deuxième gant de remplacement autour du premier.

De préférence, la première partie munie de soufflets du manchon de protection assure la protection du bras et la deuxième partie de ce manchon, réalisée en matériau souple, assure la protection de l'avant-bras et du coude de l'utilisateur.

Ainsi, grâce à ces caractéristiques de l'invention, les mouvements de l'utilisateur sont facilités puisqu'il peut plier le coude beaucoup plus facilement.

En outre, l'ensemble porte-gant selon l'invention comprend des moyens de fermeture de la première partie du manchon permettant d'isoler cette première partie de l'intérieur de l'enceinte et de maintenir la deuxième partie du manchon à l'intérieur de la première partie.

La deuxième partie en matériau souple peut être repliée à l'intérieur de la première partie à soufflets, ce qui n'était pas le cas dans le brevet US-A-4 141 609, du fait de la rigidité du matériau utilisé pour la réalisation de la totalité du manchon de protection. Les moyens de fermeture permettent donc lorsque l'utilisateur sort le gant de protection de la main à l'extérieur de l'enceinte, d'empêcher que la partie souple du manchon ne soit aspirée à l'intérieur de l'enceinte, du fait de la dépression qui règne à l'intérieur de celle-ci. On évite ainsi que cette partie souple n'entre accidentellement au contact d'une source de chaleur ou d'un produit agressif se trouvant à l'intérieur de l'enceinte.

De façon avantageuse, les moyens de fermeture comprennent un anneau disposé sur le manchon de protection, au niveau de la jonction entre la première partie à soufflets et la deuxième partie souple et un bouchon muni de moyens de fixation sur ledit anneau.

De façon avantageuse, les moyens de fixation comprennent un taraudage et l'anneau est fileté sur sa surface externe.

Grâce à cette disposition, la partie rigide à soufflets reste à l'intérieur de l'enceinte, tandis que la partie souple peut se plier facilement au niveau de la liaison avec l'anneau de fermeture, pour être amenée à l'intérieur dudit soufflet.

L'invention sera mieux comprise à la lecture de la description suivante d'un mode de réalisation, donné à titre d'exemple illustratif et non limitatif, cette description étant faite en faisant référence aux dessins joints dans lesquels :
- la figure 1 est un schéma illustrant en perspective une enceinte de confinement munie de l'ensemble porte-gant selon l'invention,
- les figures 2 et 3 représentent de façon schématique une série d'étapes A, B, C et D, E, F, concernant l'utilisation de l'ensemble porte-gant selon l'invention,
- la figure 4 représente une vue en coupe de l'ensemble porte-gant selon l'invention, lorsque le manchon de protection de l'avant-bras est déplié,
- la figure 5 est une vue en coupe de l'ensemble porte-gant selon l'invention, lorsque le gant est à l'extérieur de l'enceinte,
- la figure 6 est une vue de face du moyen de blocage de l'ensemble porte-gant selon l'invention, et
- la figure 7 est une vue en perspective des moyens de fermeture de l'ensemble porte-gant selon l'invention.

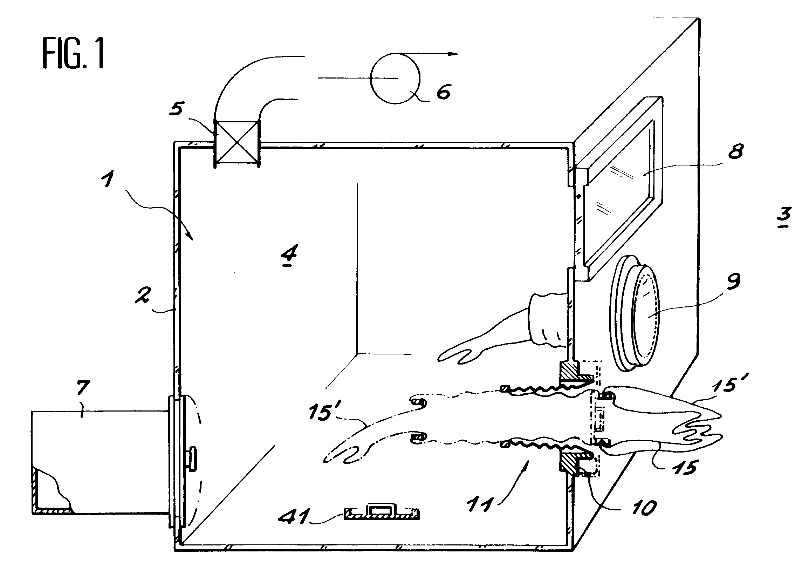

Comme illustré en figure 1, l'ensemble porte-gant selon l'invention est destiné à équiper une enceinte de confinement 1 munie de parois 2 séparant l'extérieur 3 de l'enceinte, de l'intérieur 4. De façon classique, cette enceinte 1 comprend en outre un filtre 5, une pompe 6 assurant la dépression à l'intérieur de ladite enceinte et une boîte de transfert 7 permettant d'introduire ou de sortir des outils ou des produits de l'intérieur de l'enceinte 1. L'une des parois 2 de l'enceinte présente en outre une fenêtre transparente 8 permettant à l'utilisateur de regarder à l'intérieur de l'enceinte 1.

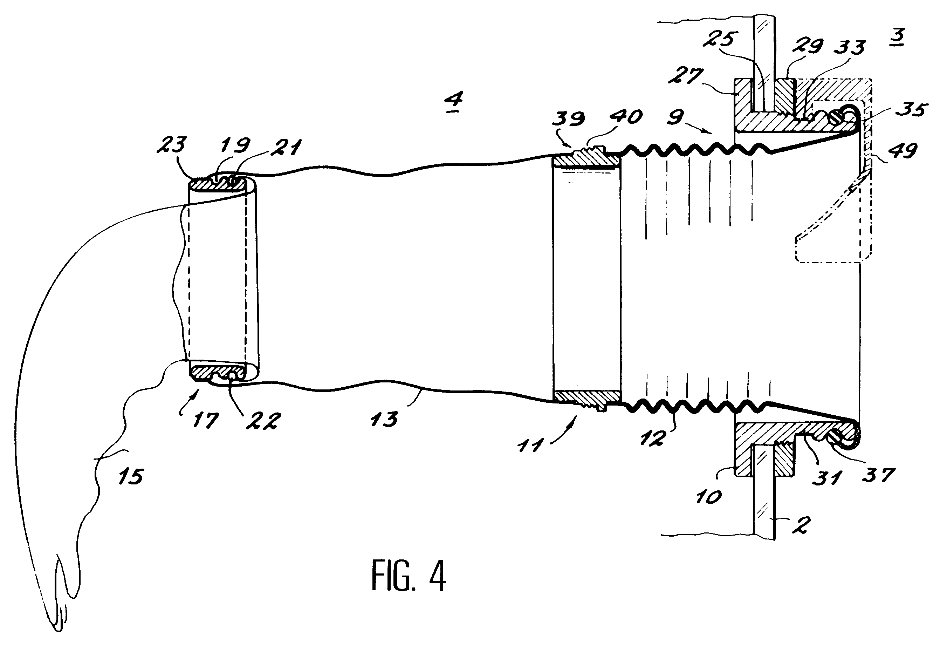

Comme illustré en figure 4, la paroi 2 présente au moins une ouverture d'accès 9 (généralement il y en a deux pour les deux bras de l'utilisateur) cette ouverture étant de préférence circulaire. Un rond de gant 10 est fixé au niveau de cette ouverture 9 de la paroi. Un manchon de protection 11 du bras et de l'avant-bras ainsi qu'un gant protégeant la main sont fixés sur ce rond de gant 10 de façon amovible.

Le manchon de protection 11 comprend une première partie 12 munie de soufflets et une deuxième partie 13 réalisée dans un matériau souple. En outre, un gant de travail 15 est fixé par des moyens d'assemblage amovibles 17 sur la deuxième partie 13 du manchon de protection.

Plus précisément, la première partie 12 munie de soufflets permet d'assurer la protection du bras, tandis que la partie souple 13 permet d'assurer la protection de l'avant-bras et du coude. Les mouvements de l'utilisateur sont ainsi facilités. Les longueurs respectives de ces deux parties 12, 13 sont conçues pour correspondre aux dimensions moyennes du bras d'un utilisateur.

De façon avantageuse, la partie rigide munie de soufflets 12 est réalisée en caoutchouc synthétique semi rigide, et la partie souple 13 est réalisée en vinyle. Toutefois, on peut choisir d'autres matériaux dès lors qu'ils répondent aux critères de rigidité ou de souplesse exigés et qu'ils présentent une résistance à l'oxydation et/ou aux phénomènes de radiolyse, et/ou aux acides forts.

Les moyens d'assemblage 17 du gant 15 et du manchon 11 comprennent un bracelet porte-gant fixé à l'extrémité de la partie souple 13 du manchon et apte à recevoir ledit gant 15. Ce bracelet porte-gant 17 est constitué par un anneau ou portion de tube cylindrique, présentant sur sa surface extérieure deux gorges annulaires sensiblement parallèles référencées 19 et 21, la gorge 19 se trouvant sensiblement au centre de ce bracelet. Ces gorges 19, 21 permettent de recevoir un joint torique 22 solidaire de l'extrémité du gant 15. En outre, ce bracelet porte-gant 17 présente à son extrémité opposée à celle présentant la gorge 21 une partie tronconique 23 sur laquelle est fixé l'extrémité de la partie 13 du manchon. Cette fixation peut se faire par collage ou thermosoudage. Cette fixation est telle que le bracelet porte-gant 17 se trouve à l'intérieur de la partie souple 13 du manchon.

Le rond de gant 10 a également une forme tubulaire cylindrique. Il présente une nervure 25 annulaire périphérique définie par deux rebords annulaires 27 et 29. Le rebord 27 est placé à l'intérieur 4 de l'enceinte de confinement 1, tandis que le rebord 29 est placé à l'extérieur 3 de l'enceinte. La nervure 25 est conçue pour recevoir les bords de la paroi 2 formant l'ouverture 9. Ce rond de gant 10 présente en outre une aile latérale 31 s'étendant vers l'extérieur de l'enceinte perpendiculairement à la paroi 2. Cette aile latérale 31 annulaire présente en outre sur sa périphérie extérieure deux gorges également annulaires référencées respectivement 33 et 35. La gorge 33 est située entre la gorge 35 et la nervure 25. La gorge 35 est destinée à recevoir le joint torique 37 formant l'extrémité du manchon à soufflets 12 et assure ainsi la fixation amovible de ce manchon.

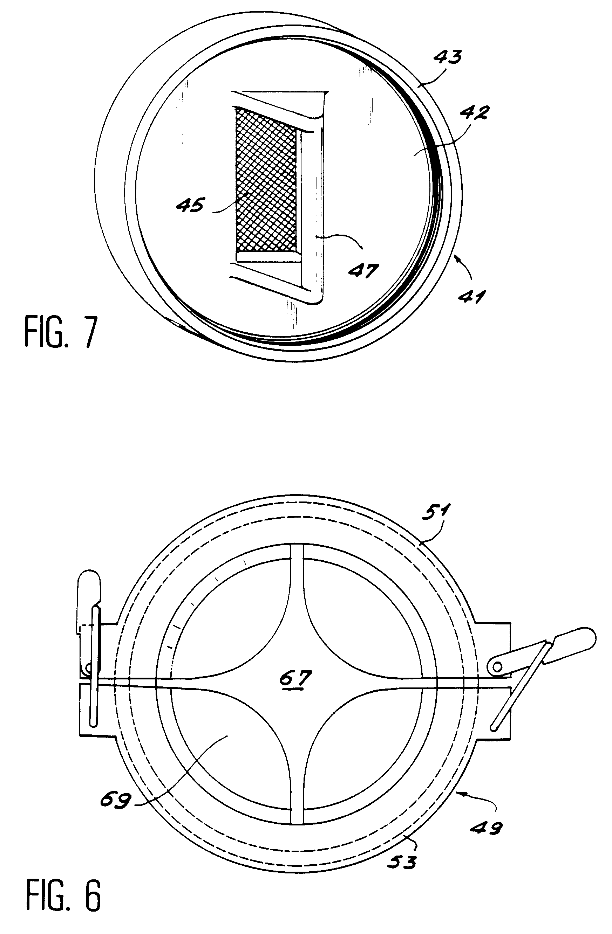

Des moyens de fermeture 39 de la première partie 12 du manchon sont prévus et disposés à la jonction entre les deux parties 12 et 13 du manchon de protection. Plus précisément, ces moyens de fermeture 39 comprennent un anneau fileté sur sa surface extérieure et fixé par collage ou thermosoudage respectivement à l'extrémité libre du manchon à soufflets 12 et à l'extrémité libre de la partie souple 13. Le filetage est référencé 40. Cet anneau 39 est apte à coopérer avec un bouchon de fermeture 41 représenté à la figure 7 et qui va maintenant être décrit plus en détail. Ce bouchon 41 est constitué par un disque ou fond 42 en matière plastique muni d'un rebord annulaire périphérique 43 taraudé de façon à pouvoir être vissé sur le filtage 40 de l'anneau 39. Le taraudage du bouchon 41 constitue un exemple de moyens de fixation sur l'anneau 39. Toutefois, il est bien évident que l'on pourrait prévoir d'autre modes de fixation tels qu'une fixation à baïonnette, un cran ou l'assemblage en force, sans pour autant sortir du cadre de l'invention. En outre, ce bouchon de fermeture 41 comprend sensiblement en son centre une grille d'aération 45. Il comprend également une poignée de préhension 47 fixée sur le fond 42 du bouchon de part et d'autre de la grille 45. Cette grille 45, lorsque le bouchon 41 est en place sur l'anneau 39, permet d'assurer la dépression à l'intérieur du soufflet 12.

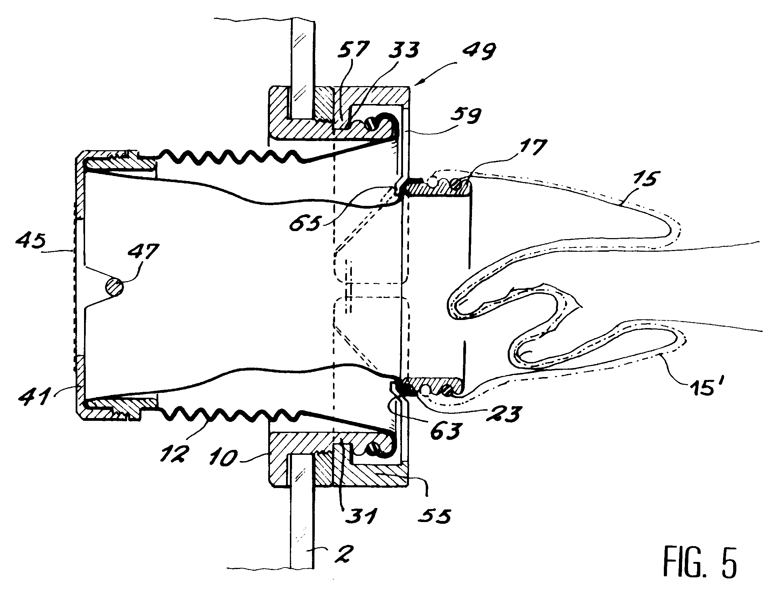

L'ensemble porte-gant selon l'invention comprend également des moyens de blocage des moyens d'assemblage 17 du gant 15 et du manchon 11. Ces moyens de blocage sont illustrés notamment en figures 5 et 6 et portent la référence générale 49. Ces moyens de blocage 49 comprennent de préférence, deux éléments symétriques et sensiblement identiques. On pourrait toutefois prévoir plus de deux éléments. L'élément supérieur (par rapport à la figure 6 et par rapport au sens normal d'utilisation), porte la référence 51 et l'élément inférieur porte la référence 53. Les moyens de blocage 49 sont conçus pour être disposés sur l'aile latérale 31 du rond de gant 10 et pour recouvrir celui-ci. Plus précisement, chaque élément 51, 53 présente la forme d'une gouttière cintrée en demi cercle avec une coupe sensiblement en C comme cela apparaît mieux en figure 5. Chaque gouttière est disposée "à cheval" sur au moins une partie de l'aile latérale 31 du rond du gant. Chaque élément 51, 53 comprend donc un bord périphérique latéral 55 terminé par un élément formant joint d'étanchéité 57 destiné à s'engager dans la gorge 33 du rond de gant 10. Ce rebord 55 se prolonge vers son centre par une face avant 59, et par une partie 63 légèrement oblique. Cette partie oblique 63 se prolonge intérieurement par un épaulement en arc de cercle 65 destiné à recevoir la partie tronconique 23 du bracelet porte-gant 17. En outre, ces deux éléments 51, 53 présentent intérieurement, au niveau de leur ouverture centrale 67, quatre bavettes anti-retour 69 réalisées en matière plastique souple et épaisse (voir figure 6). Ces bavettes anti-retour 69 ont pour rôle d'empêcher que le gant 15 ne soit aspiré à l'intérieur de la partie de protection en soufflets 12.

Les moyens de blocage 49 peuvent occuper deux positions, une première position verrouillée dans laquelle les deux éléments 51 et 53 sont verrouillées par des moyens 71 et une seconde position déverrouillée, dans laquelle ces deux éléments sont écartés l'un de l'autre et permettent le passage du rond de gant 17 et du gant 15.

Les moyens de verrouillage 71 sont constitués par deux crochets à ressort prévu de part et d'autre des deux éléments 51 et 53. En position verrouillée, les deux éléments 51 et 53 sont plaqués l'un conte l'autre (partie gauche de la figure 6) et en position déverrouillée, l'élément inférieur 53 est légèrement écarté de l'élément supérieur 51 (partie droite de la figure 6).

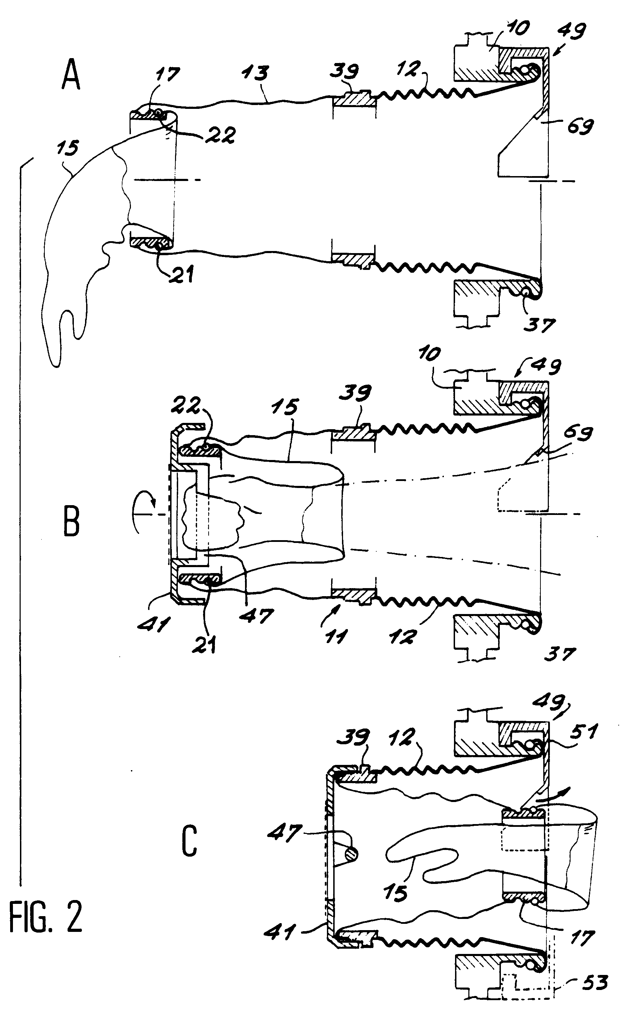

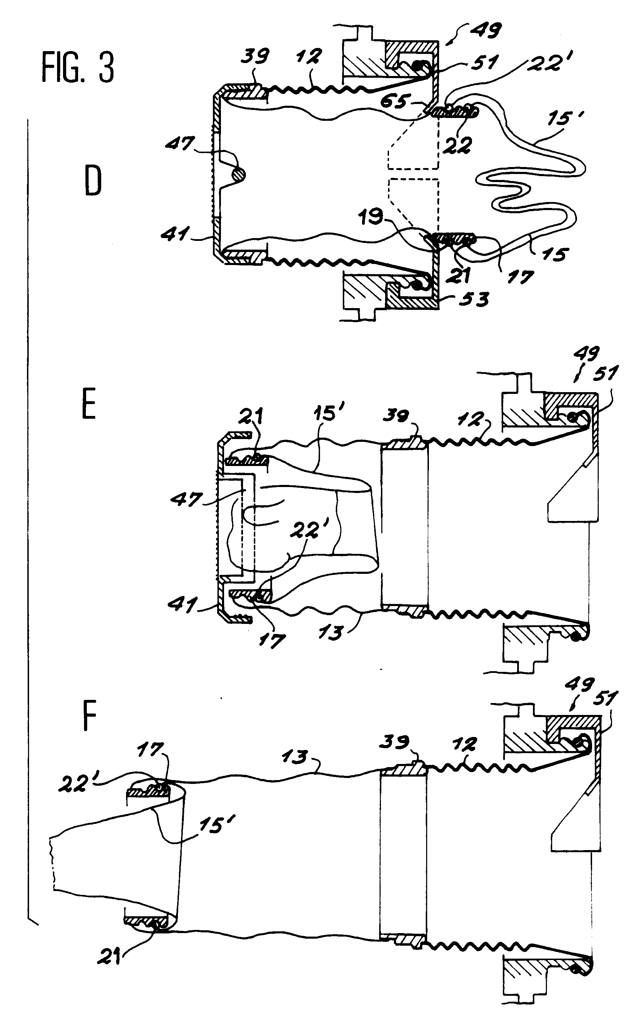

Le fonctionnement de ce dispositif va maintenant être expliqué plus en détail en faisant référence aux figures 2 et 3.

La partie A de la figure 2 illustre l'ensemble porte-gant au repos, c'est-à-dire quand la main et le bras de l'utilisateur ne sont pas à l'intérieur. On notera que les moyens de blocage 49 n'ont été que partiellement représentés.

Lorsque l'utilisateur souhaite changer le gant 15 dont le joint torique 22 est positionné dans la gorge annulaire 21, il introduit sa main et son bras à l'intérieur de l'ensemble porte-gant comme représenté dans la partie B de la figure 2, et il saisit le bouchon de fermeture 41 par l'intermédiaire de sa poignée de préhension 47. Il recule la main et le bras à l'intérieur du manchon de protection 11 jusqu'à amener le bouchon 41 au niveau de l'anneau 39 et visse alors le bouchon sur cet anneau par rotation d'un quart de tour. Il se retrouve alors dans la situation illustrée dans la partie C de la figure 2). Ensuite, il continue à retirer sa main ainsi que le gant 15 jusqu'à amener celui-ci à l'extérieur de l'enceinte, et à retourner le gant 15 comme cela est illustré dans la partie D de la figure 3. Pour ce faire, il est nécessaire évidemment que le dispositif de blocage 49 soit déverrouillé (position basse de l'élément 53 illustrée en partie C de la figure 2). Ensuite, de son autre main, il verrouille le dispositif de blocage 49 et l'anneau 17 repose donc sur l'épaulement 65 du dispositif 49. Il peut alors enfiler par dessus le gant usagé 15 qui se trouve à l'envers, un nouveau gant 15', disposé également à l'envers et dont le joint torique 22' est positionné dans la gorge annulaire 19, (partie D de la figure 3).

Ensuite, il enfonce sa main dans le gant neuf 15' pour saisir le gant usagé 15, sortir le joint torique 22 du gant usagé 15 de la gorge annulaire 21 et faire tomber le gant usagé 15 à l'intérieur de l'ensemble porte-gant.

Le joint torique 22' du nouveau gant 15' est alors déplacé de la gorge annulaire 19 dans la gorge annulaire 21 tout en gardant le maximum de contact avec le bracelet porte-gant 17.

Pour une étanchéité et une sécurité maximales, on applique au moins un tour de ruban adhésif (non représenté) au niveau de la gorge annulaire 21 dans laquelle est placé le joint torique 22'.

Ensuite, comme illustré dans la partie E de la figure 3, il enfonce de nouveau sa main à l'intérieur du gant 15' de façon à le remettre à l'endroit, à l'intérieur du soufflet 11.

Il peut ensuite déverrouiller le bouchon 41 par rotation de celui-ci et le poser à l'intérieur de l'enceinte. Il se trouve alors dans la situation représentée dans la partie F de la figure 3 où sa main est protégée par le gant 15'.

## Revendications

1. Ensemble porte-gant pour une enceinte de confinement (1), cette enceinte comportant au moins une ouverture d'accès (9) sur laquelle est fixé un rond de gant (10), l'ensemble porte-gant comportant un manchon (11) de protection du bras et de l'avant-bras fixé sur ledit rond de gant (10) et un gant de travail (15) protégeant la main et muni de moyens d'assemblage (17) amovibles avec ledit manchon de protection (11), caractérisé en ce que le manchon de protection (11) comprend au moins deux parties, une première partie (12) munie de soufflets et une deuxième partie (13) réalisée dans un matériau souple, cette dernière partie (13) pouvant se replier à l'intérieur de ladite première partie (12) et en ce que ledit ensemble porte-gant comprend des moyens de blocage (49) des moyens d'assemblage (17) du gant (15) et du manchon de protection (11), ces moyens de blocage (49) étant mobiles entre une position verrouillée dans laquelle ils maintiennent les moyens d'assemblage (17) et le gant (15) à l'extérieur de l'enceinte (1) et une position déverrouillée dans laquelle ils autorisent le passage du gant (15) et de ses moyens d'assemblage (17) entre l'intérieur et l'extérieur de l'enceinte.

2. Ensemble porte-gant selon la revendication 1, caractérisé en ce que les moyens d'assemblage (17) du gant (15) et du manchon de protection (11) comprennent un bracelet porte-gant prévu à l'extrémité dudit manchon et apte à coopérer avec un joint torique (22) prévu sur ledit gant et en ce que les moyens de blocage (49) comprennent au moins deux éléments (51, 53) pouvant être assemblées l'un avec l'autre autour du rond de gant (10) de l'enceinte, chacun de ces éléments (51, 53) présentant un épaulement en arc de cercle (65) apte à recevoir au moins une partie dudit bracelet porte-gant (17) et à bloquer celui-ci lorsque lesdits éléments (51, 53) sont assemblés en position verrouillée.

3. Ensemble porte-gant selon la revendication 2, caractérisé en ce que les moyens de blocage (49) comprennent au moins une bavette anti-retour (69) destinée à empêcher le retour du gant (15) vers l'intérieur de l'enceinte (1) lorsqu'il se trouve à l'extérieur de celle-ci.

4. Ensemble porte-gant selon la revendication 2, caractérisé en ce que le bracelet porte-gant (17) présente extérieurement deux gorges annulaires (19, 21) sensiblement parallèles aptes à recevoir le joint torique (22) prévu sur le gant (15).

5. Ensemble porte-gant selon la revendication 2, caractérisé en ce que les moyens de blocage (49) comprennent au moins deux éléments (51, 53) présentant la forme d'une gouttière cintrée en demi cercle, chaque gouttière étant disposée à cheval sur au moins une partie de l'aile latérale (31) du rond de gant (10).

6. Ensemble porte-gant selon l'une des revendications précédentes, caractérisé en ce qu'il comprend des moyens de fermeture (39) de la première partie du manchon (12), permettant d'isoler cette première partie de l'intérieur de l'enceinte et de maintenir la deuxième partie (13) du manchon à l'intérieur de cette première partie.

7. Ensemble porte-gant selon la revendication 6, caractérisé en ce que les moyens de fermeture (39) comprennent un anneau disposé sur le manchon de protection (11), au niveau de la jonction entre la première partie à soufflets (12) et la deuxième partie souple (13) et un bouchon de fermeture (41) muni de moyens de fixation sur ledit anneau.

8. Ensemble porte-gant selon la revendication 6, caractérisé en ce que les moyens de fixation comprennent un taraudage et en ce que l'anneau (39) est fileté sur sa surface extérieure.

9. Ensemble porte-gant selon la revendication 6 ou 7, caractérisé en ce que le bouchon (41) est muni d'une grille d'aération (45).

10. Ensemble porte-gant selon l'une des revendications 6 à 8, caractérisé en ce que le bouchon (41) est muni sur son fond d'une poignée de préhension (47).

11. Ensemble porte-gant selon la revendication 1, caractérisé en ce que la première partie munie de soufflets (12) du manchon de protection assure la protection du bras et en ce que la deuxième partie de ce manchon (13), réalisée en matériau souple, assure la protection de l'avant-bras et du coude de l'utilisateur.

12. Ensemble porte-gant selon la revendication 1, caractérisé en ce que la première partie du manchon de protection (12) est réalisée en caoutchouc synthétique rigide.

13. Ensemble porte-gant selon la revendication 1, caractérisé en ce que la deuxième partie (13) du manchon de protection est réalisée en vinyle.

14. Ensemble porte-gant selon la revendication 1, caractérisé en ce que le manchon de protection (11) est fixé de façon amovible sur ledit rond de gant (10).

## Claims

1. Glove holder unit for a confinement enclosure (1), said enclosure having at least one access opening (9) on which is fixed a glove disk (10), the glove holder unit having a sleeve (11) for protecting the arm and forearm fixed to the said glove disk (10) and a working glove (15) protecting the hand and provided with means (17) for the detachable assembly with said protective sleeve (11), characterized in that the protective sleeve (11) comprises at least two parts, a first part (12) provided with bellows and a second part (13) made from a flexible material, the latter part (13) being able to bend within the first part (12) and in that the glove holder unit also comprises means (49) for locking the assembly means (17) of the glove (15) and the protective sleeve (11), said locking means (49) being mobile between a locked position in which they maintain the assembly means (17) and the glove (15) outside the enclosure (1) and an unlocked position in which they allow the passage of the glove (15) and its assembly means (17) between the interior and exterior of the enclosure.

2. Glove holder unit according to claim 1, characterized in that the assembly means (17) of the glove (15) and the protective sleeve (11) comprise a glove holder bracelet provided at the end of said sleeve and able to cooperate with an O-ring (22) provided on the said glove and in that the locking means (49) incorporate at least two elements (51, 53) which can be assembled with one another about a glove disk (10) of the enclosure, each of these elements (51, 53) having a circular arc-shaped shoulder (65) able to receive at least one part of said glove holder bracelet (17) and lock the latter when the elements (51, 53) are assembled in the locked position.

3. Glove holder unit according to claim 2, characterized in that the locking means (49) comprise at least one return-preventing strip (69) for preventing the return of the glove (15) to the interior of the enclosure (1) when positioned outside the same.

4. Glove holder unit according to claim 2, characterized in that the glove holder bracelet (17) is externally provided with two substantially parallel, annular grooves (19, 21) able to receive the O-ring (22) provided on the glove (15).

5. Glove holder unit according to claim 2, characterized in that the locking means (49) comprise at least two elements (51, 53) shaped like a semicircularly curved channel, each channel being positioned astride on at least one part of the lateral flange (31) of the glove disk (10).

6. Glove holder unit according to any one of the preceding claims, characterized in that it comprises means (39) for sealing the first part of the sleeve (12), making it possible to insulate said first part from the interior of the enclosure and maintain the second part (13) of the sleeve within the said first part.

7. Glove holder unit according to claim 6, characterized in that the sealing means (39) comprise a ring located on the protective sleeve (11) at the junction between the first bellows-equipped part (12) and the second flexible part (13) and a sealing plug (41) provided with means for fixing to the said ring.

8. Glove holder unit according to claim 6, characterized in that the fixing means comprise a tap and in that the outer surface of the ring (39) is threaded.

9. Glove holder unit according to claim 6 or 7, characterized in that the plug (41) is provided with an aerating grid (45).

10. Glove holder unit according to any one of the claims 6 to 8, characterized in that the bottom of the plug (41) is provided with a gripping handle (47).

11. Glove holder unit according to claim 1, characterized in that the first, bellows-equipped part (12) of the protective sleeve protects the arm and in that the second part of said sleeve (13), made from flexible material, protects the user's forearm and elbow.

12. Glove holder unit according to claim 1, characterized in that the first part of the protective sleeve (12) is made from rigid, synthetic rubber.

13. Glove holder unit according to claim 1, characterized in that the second part (13) of the protective sleeve is made from vinyl.

14. Glove holder unit according to claim 1, characterized in that the protective sleeve (11) is detachably fixed to said glove disk (10).

## Patentansprüche

1. Handschuhhalteeinrichtung für einen Isolierraum (1), wobei dieser Raum wenigstens eine Durchlaßöffnung (9) aufweist, an der ein Handschuhring (10) befestigt ist, wobei die Handschuhhalteeinrichtung eine Schutzmanschette (11) für den Oberarm und den Unterarm umfaßt, befestigt an besagtem Handschuhring (10), und einen Arbeitshandschuh (15), der die Hand schützt und versehen ist mit lösbaren Einrichtungen (17) zum Zusammenbau mit besagter Schutzmanschette (11),
**dadurch gekennzeichnet,**
daß die Schutzmanschette (11) wenigstens zwei Teile umfaßt, einen ersten, mit Falten versehenen Teil (12) und einen zweiten, aus einem flexiblen Material hergestellten Teil (13), wobei letzterer Teil (13) sich zurückziehen läßt in Innere des ersten Teils (12), und dadurch, daß die besagte Handschuhhalteeinrichtung Blockierungseinrichtungen (49) der Einrichtungen (17) zum Zusammenbau des Handschuhs (15) und der Sicherheitsmanschette (11) umfaßt, wobei diese Blockierungseinrichtungen (49) beweglich sind zwischen einer Verriegelungsstellung, in der sie die Zusammenbaueinrichtungen (17) und den Handschuh (15) außerhalb des Raums (1) halten, und eine Entriegelungsstellung, in der sie den Durchgang des Handschuhs (15) und seiner Zusammenbaueinrichtungen (17) zwischen dem Inneren und dem Äußeren des Raums zulassen.

2. Handschuhhalteeinrichtung nach Anspruch 1, dadurch gekennzeichnet, daß die Zusammenbaueinrichtungen (17) des Handschuhs (15) und der Schutzmanschette (11) ein Handschuhträger-Armband umfassen, vorgesehen am Ende der Manschette und zusammenwirkend mit einem Runddichtring (22), vorgesehen auf dem Handschuh, und dadurch, daß die Blockierungseinrichtungen (49) wenigstens zwei Elemente (51, 53) umfassen, die miteinander um den Handschuhring (10) des Isolierraums herum zusammengebaut werden können, wobei jedes dieser Elemente (51, 53) einen bogenförmigen Absatz (65) aufweist, der wenigstens einen Teil des genannten Handschuhträger-Armbands (17) aufnehmen und dieses arretieren kann, bis besagte Elemente (51, 53) in verriegelter Stellung zusammengebaut sind.

3. Handschuhhalteeinrichtung nach Anspruch 2, dadurch gekennzeichnet, daß die Blockierungseinrichtungen (49) wenigstens eine Anti-Retour-Einrichtung (69) umfassen, die die Retourbewegung des Handschuhs (15) in das Innere des Raums (1) verhindert, wenn er sich außerhalb von diesem befindet.

4. Handschuhhalteeinrichtung nach Anspruch 2, dadurch gekennzeichnet, daß das Handschuhträger-Armband (17) außen zwei im wesentlichen parallele ringförmige Rillen (19, 21) zur Aufnahme des auf dem Handschuh (15) vorgesehenen Runddichtrings (22) aufweist.

5. Handschuhhalteeinrichtung nach Anspruch 2, dadurch gekennzeichnet, daß die Blockierungseinrichtungen (49) wenigstens zwei Elemente (51, 53) mit der Form einer halbkreisförmig gebogenen Rinne umfassen, wobei jede Rinne wenigstens über einen Teil des Seitenflügels (31) des Handschuhrings (10) ragt.

6. Handschuhhalteeinrichtung nach einem der vorhergehenden Ansprüche, dadurch gekennzeichnet, daß sie Verschlußeinrichtungen (39) des ersten Teils der Maschette (12) umfaßt, die ermöglichen, diesen ersten Teil vom Inneren des Raums zu isolieren und den zweiten Teil (13) der Manschette im Innern dieses ersten Teils zu halten.

7. Handschuhhalteeinrichtung nach Anspruch 6, dadurch gekennzeichnet, daß die Verschlußeinrichtungen (39) einen Ring umfassen, angeordnet auf der Schutzmanschette (11), in Höhe der Verbindung zwischen dem ersten, Falten aufweisenden Teil (12) und dem zweiten, flexiblen Teil (13), und einen Verschlußdeckel (41), versehen mit Einrichtungen zur Befestigung auf besagtem Ring.

8. Handschuhhalteeinrichtung nach Anspruch 6, dadurch gekennzeichnet, daß die Befestigungseinrichtungen ein Gewinde umfassen und daß der Ring (39) auf seiner Außenfläche gewindet ist.

9. Handschuhhalteeinrichtung nach Anspruch 6 oder 7, dadurch gekennzeichnet, daß der Deckel (41) mit einem Lüftungsgitter (45) versehen ist.

10. Handschuhhalteeinrichtung nach einem der Ansprüche 6 bis 8, dadurch gekennzeichnet, daß der Deckel (41) an seinem Unterteil mit einem Handgriff (47) versehen ist.

11. Handschuhhalteeinrichtung nach Anspruch 1, dadurch gekennzeichnet, daß der erste, Falten aufweisende Teil (12) der Schutzmanschette den Schutz des Oberarms gewährleistet, und daß der zweite, aus flexiblem Material hergestellte Teil (13) dieser Manschette den Schutz des Unterarms und des Ellbogens des Benutzers gewährleistet.

12. Handschuhhalteeinrichtung nach Anspruch 1, dadurch gekennzeichnet, daß der erste Teil der Schutzmanschette (12) aus steifem Kunstgummi hergestellt ist.

13. Handschuhhalteeinrichtung nach Anspruch 1, dadurch gekennzeichnet, daß der zweite Teil (13) der Schutzmanschette aus Vinyl hergestellt ist.

14. Handschuhhalteeinrichtung nach Anspruch 1, dadurch gekennzeichnet, daß die Schutzmanschette (11) lösbar an dem Handschuhring (10) befestigt ist.
